# EUROPÄISCHE PATENTSCHRIFT

(11) **EP 4 027 026 B1**
(45) Veröffentlichungstag und Bekanntmachung des Hinweises auf die Patenterteilung: **25.01.2023**
(21) Anmeldenummer: 21150547.4
(22) Anmeldetag: 07.01.2021
(51) Int. Cl.: F16B 15/08, F16B 15/02

(54) **NAGEL, INSBESONDERE FÜR DEN EINSATZ IN EINEM NAGELSETZGERÄT**
NAIL, IN PARTICULAR FOR USE IN A NAILING APPARATUS
CLOUS, EN PARTICULIER DESTINÉ À L'UTILISATION DANS UN APPAREIL DE POSE POUR CLOUS

(43) Veröffentlichungstag der Anmeldung: 13.07.2022
(73) Patentinhaber: Raimund Beck Nageltechnik GmbH, 5270 Mauerkirchen (AT)
(72) Erfinder: SIEMERS, Stefan, 84489 Burghausen (DE)
(74) Vertreter: Paul & Albrecht Patentanwälte PartG mbB

(56) Entgegenhaltungen:
- EP-A1- 3 617 532
- DE-A1-102017 106 705
- DE-A1-102018 130 545
- JP-A- 2002 154 540
- JP-U- S56 120 408

## Beschreibung

Die vorliegende Erfindung betrifft einen Nagel, insbesondere für den Einsatz in einem Nagelsetzgerät, der aus einem ausschließlich oder überwiegend lignocellulosischem Material besteht und einen Nagelschaft, der eine Nagelachse definiert, eine am vorderen Ende des Nagelschafts angeordnete Nagelspitze und einen am hinteren Ende des Nagelschafts angeordneten, gegenüber dem Nagelschaft verbreitert ausgebildeten Nagelkopf aufweist.

Nägel sind seit langer Zeit als Verbindungsmittel bekannt. Sie werden überwiegend aus Metall hergestellt, beispielsweise aus Stahl, Aluminium, Kupfer oder dergleichen. Metallnägel sind jedoch mit Nachteilen behaftet. So neigen Stahlnägel trotz Korrosionsschutzmaßnahmen wie z.B. Verzinken unter ungünstigen Bedingungen zum Rosten, und zwar insbesondere dann, wenn in dem genagelten Werkstoff saure Bedingungen herrschen. Dies gilt vor allem für gerbstoffreiche Hölzer, die wegen ihrer Dauerhaftigkeit im Außenbereich beispielsweise für Fassaden und Terrassen eingesetzt werden. Bei Bewitterung können unerwünschte dunkle bis schwarze Verfärbungen an den Nagelstellen entstehen. Eine Abhilfe durch Verwendung rostfreier Stahlsorten ist möglich aber sehr kostenaufwendig. Ein weiterer Nachteil besteht darin, dass sich das Recycling von mit Stahlnägeln durchsetzten Holzprodukten aufwendig gestaltet.

Aus diesem Grund werden alternativ Nägel aus überwiegend lignocellulosischen Materialien eingesetzt, wie beispielsweise Holz oder verholztem Pflanzenmaterial in Form von Bambus oder dergleichen. Lange Zeit konnten solche Holznägel nur dann verwendet werden, wenn der zu nagelnde Untergrund zuvor mit einem Loch versehen wurde, in welches dann der Nagel getrieben wurde. Neuere Entwicklungen ermöglichen es jedoch, Holznägel mit Hilfe von Nagelsetzgeräten wie beispielsweise Druckluftnaglern direkt in Holz einzuschießen, ohne das Holzmaterial vorzubohren. Zu verweisen ist insbesondere auf die WO 2016/180900 A1 der Anmelderin, aus der ein Nagelstreifen zum Einsatz in einem Nagelsetzgerät bekannt ist, dessen aus einem Nagelschaft und einer Nagelspitze bestehenden Nägel aus Holz oder Holzwerkstoffen bestehen und durch Verbindungsmittel miteinander verbunden sind, welche beim Setzen der Nägel automatisch abgeschert werden. Ein weitere Nagel, der einen Nagelschaft, eine Nagelspitze sowie einen Nagelkopf aufweist und unter anderem aus Holz bestehen kann, ist in der DE 10 2017 100748 A1 offenbart. Ein weiterer Nagel mit Nagelschaft, Nagelspitze und Nagelkopf ist aus der DE 10 2018 130545 A1 bekannt.

Ein Nachteil der bekannten Nägel besteht darin, dass sie zur Anbringung von Fassadenbrettern an einer Unterkonstruktion nur bedingt geeignet sind, weil die Eindringtiefe des Kopfendes in das Plattenmaterial nicht definiert bestimmt werden kann und die Gefahr besteht, dass die Fassadenplatten über das Kopfende abrutschen. Mit anderen Worten ist der sichere Halt einer mit den bekannten Holznägeln angebrachten Fassadenplatte nicht hinreichend gewährleistet.

Aufgabe der vorliegenden Erfindung ist es daher, einen Nagel der eingangs genannten Art zu schaffen, der zur Fixierung von Fassadenplatten an einer Unterkonstruktion geeignet ist.

Zur Lösung dieser Aufgabe schafft die vorliegende Erfindung einen Nagel der eingangs genannten Art und gemäß Anspruch 1, der dadurch gekennzeichnet ist, dass der Nagelschaft, die Nagelspitze und der Nagelkopf einen kreisrunden Querschnitt besitzen, und dass der Nagelschaft und der Nagelkopf durch einen sich zum Nagelkopf aufweitenden Übergangsbereich verbunden sind, dessen ringförmige Außenfläche zur Nagelachse hin konkav gekrümmt ist.

Derartige Nägel eignen sich besonders dazu, Fassadenbretter an einer Unterkonstruktion, beispielsweise an einer Holzkonstruktion zu befestigen. Aufgrund des kreisrunden, gegenüber dem Schaft verdicken Nagelkopfes in Kombination mit dem sich aufweitenden Übergangsbereich, der eine konkav, d.h. nach innen hin zur Nagelachse gekrümmte Außenfläche besitzt, wird eine hervorragende Auszugsfertigkeit des Nagels erzielt. Ferner werden die Fassadenplatten durch den Übergangsbereich und den Nagelkopf zusätzlich abgestützt, so dass ein sicherer Halt der Fassadenplatten an der Unterkonstruktion sichergestellt werden kann.

Die erfindungsgemäßen Nägel mit einem kreisrunden Querschnitt lassen sich in einfacher Weise durch Drehen oder Drechseln aus einem Stangenmaterial herstellen.

In bevorzugter weise ist die Außenfläche des Übergangsbereichs im Querschnitt kreisbogenabschnittförmig ausgebildet und erstreckt sich insbesondere über einen Umfangswinkel von 90°. Zweckmäßigerweise weist die Außenfläche dabei einen Rundungsradius auf, der ≥ 0,3 mm, bevorzugt ≥ 0,6 mm ist und besonders bevorzugt 0,8 mm beträgt. Mit Krümmungsradien in diesen Bereichen wurden besonders gute Auszugsfestigkeiten erzielt.

Zur weiteren Unterstützung der Auszugsfestigkeit ist vorgesehen, dass der Übergangsbereich unmittelbar an der vorderen Stirnfläche, insbesondere der vorderen äußeren Umfangskante des Nagelkopfes beginnt und/oder stetig in den Nagelschaft übergeht.

Bei einer weiteren Ausgestaltung der Erfindung ist der Nagelkopf zylindrisch ausgebildet, wobei der Nagelkopf insbesondere einen Durchmesser von wenigstens 5,0 mm und/oder von maximal 7,0 mm aufweist. Bevorzugt beträgt der Durchmesser 6,3 mm ±0,3 mm. Vorteilhaft ist der Durchmesser des Nagelkopfes um 25% bis 40% größer als der Durchmesser des sich an dem Übergangsbereich anschließenden axialen Endabschnitts des Nagelschafts. Insbesondere ist hierbei der Durchmesser des Nagelkopfes um 34 ± 1% größer als der Durchmesser des sich an den Übergangsbereich anschließenden axial hinteren Endabschnitts des Nagelschafts.

In weiterer Ausgestaltung der Erfindung beträgt die Gesamtlänge des Nagelkopfes ≥ 1,5 mm und/oder ≤ 4,5 mm und beträgt insbesondere 3,0 bis 3,2 mm. Auf diese Weise wird eine hinreichende Abstützung der mit den erfindungsgemäßen Nägeln fixierten Fassadenplatten erreicht. Außerdem wird durch die vergleichsweise hohe Kopfform einem Wegbrechen der Kopfringfläche durch den Aufschlag des Nagelkopfes beim Setzvorgang entgegengewirkt.

Der erfindungsgemäße Nagel weist gemäß einer Ausführungsform der Erfindung eine Gesamtlänge von wenigstens 50 mm und/oder von maximal 90 mm, insbesondere von maximal 80 mm und besonders bevorzugt von maximal 70 mm auf und beträgt bevorzugt 60 mm. Damit lässt sich der erfindungsgemäße Nagel für alle gängigen Fassadenplattenstärken einsetzen.

Vorteilhafterweise weist ein sich an den Übergangsbereich anschließender, axial hinterer Endabschnitt des Nagelschaftes einen konstanten Durchmesser auf, der insbesondere wenigstens 3,5 mm und/oder maximal 5,5 mm und bevorzugt 4,7 mm beträgt.

Gemäß einer Ausgestaltung der vorliegenden Erfindung weist der Nagelschaft über seine gesamte Länge einen konstanten Querschnitt auf. Entsprechend einfach lässt sich der Nagel in Fassadenplatten eintreiben.

Alternativ kann der Nagelschaft einen sich an den axial hinteren Endabschnitt anschließenden axialen Schaftabschnitt aufweisen, an welchem Verankerungsstrukturen ausgebildet sind, die jeweils einen sich zur Nagelspitze konisch verjüngenden Strukturabschnitt aufweisen, wobei die Verankerungsstrukturen bevorzugt in gleicher Weise ausgebildet sind. Damit wird dem Umstand Rechnung getragen, dass gemäß gängigen Normen im Holzbau ein profilierter Nagelschaft für dauerhaft statischen Auszug erforderlich ist.

Dabei können die Verankerungsstrukturen einen maximalen Strukturdurchmesser aufweisen, der größer, insbesondere um wenigstens 1,5 % und/oder um maximal 3% größer, bevorzugt um 2 bis 2,2 % größer, als der Schaftdurchmesser des axial hinteren Endabschnitts des Nagelschaftes ist, der sich an den Übergangsbereich anschließt. Bei einer besonders bevorzugten Ausführungsform der Erfindung beträgt der maximale Strukturdurchmesser 4,8 mm. Diese Ausgestaltung ist besonders sinnvoll, wenn der Nagelschaft in seinem zum Übergangsbereich benachbarten axialen Endabschnitt einen Durchmesser von 4,7 mm aufweist.

Die Verankerungsstrukturen weisen bei einer Ausführungsform der Erfindung einen minimalen Strukturdurchmesser auf, der kleiner, insbesondere um wenigstens 8% und/oder maximal 12% kleiner, bevorzugt um 8,3 bis 8,7 % kleiner als der Schaftdurchmesser des axial hinteren Endabschnitts des Nagelschaftes ist, der sich an den Übergangsbereich anschließt. Bevorzugt beträgt der minimale Schaftdurchmesser 4,3 mm.

Eine weitere Ausgestaltung der Ausführungsform mit Verankerungsstrukturen zeichnet sich dadurch aus, dass der maximale Strukturdurchmesser jeweils am zum Nagelkopf weisenden hinteren Ende der sich konisch verjüngenden Strukturabschnitte und der minimale Strukturdurchmesser an deren vorderen Enden vorhanden sind.

Bei einer vorteilhaften Weiterbildung dieser Ausführung ist vorgesehen, dass die Verankerungsstrukturen einen in der Längsrichtung hinter den sich konisch verjüngenden Strukturabschnitten liegenden zweistufigen Übergangsabschnitt aufweisen, dessen erste, hintere Übergangsstufe einen kreissegmentartigen Querschnitt und dessen zweite, vordere Übergangsstufe einen kreissegmentartigen Querschnitt aufweist, wobei der Krümmungsradius der zweiten Übergangsstufe größer als der Krümmungsradius der erste Übergangsstufe ist, wobei der Krümmungsradius der ersten Übergangsstufe insbesondere 0,2 mm und der Krümmungsradius der zweiten Übergangsstufe insbesondere 0,25 mm beträgt.

Bevorzugt beträgt die Gesamtlänge der Verankerungsstrukturen mit dem sich konisch verjüngenden Strukturabschnitt und dem Übergangsabschnitt wenigstens 2 mm und/oder maximal 2,3 mm, wobei die Verankerungsstrukturen bevorzugt eine Gesamtlänge von 2,1 mm aufweisen.

Dabei kann sich der axiale Schaftabschnitt, an welchem die Verankerungsstrukturen ausgebildet sind, unmittelbar an die Nagelspitze anschließen. Alternativ kann dazwischen ein vorderer axialer Endabschnitt mit einem konstanten Durchmesser, welcher dem Schaftdurchmesser des sich an den Übergangsbereich anschließenden axial hinteren Endabschnitts entspricht, vorgesehen sein. Die axiale Länge dieses vorderen Endabschnitts liegt insbesondere zwischen 0,5 und 1,5 mm und beträgt vorzugsweise 1 mm.

Der Spitzenwinkel der Nagelspitze liegt bevorzugt im Bereich von 60 bis 120° und beträgt insbesondere 90° ± 3°.

Gemäß einer Ausführungsform der vorliegenden Erfindung ist vorgesehen, dass der Nagel aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignocellulosische Faser enthält, hergestellt ist.

Der organisch gebundene Holzwerkstoff enthält bevorzugt Melamin oder Phenolharz als Kunstharz, was dem Nagel eine besonders gute Stabilität verleiht.

Der organisch gebundene Holzwerkstoff enthält Kunstharz vorteilhaft in einer Menge von wenigstens 10 Gew%, insbesondere wenigstens 15 Gew%, wobei der Kunstharzanteil bevorzugt 20 Gew% beträgt.

Gemäß einer Ausgestaltung der vorliegenden Erfindung besteht der Nagel aus einem Material mit einer Dichte größer 0,65 g/cm³, insbesondere einer Dichte größer 0,85 g/cm³, bevorzugt einer Dichte größer 1,0 g/cm³ oder einer Dichte größer 1,1 g/cm³.

Ferner schafft die vorliegende Erfindung einen Nagelstreifen umfassend eine Mehrzahl von erfindungsgemäßen Nägeln. Ein solcher Nagelstreifen lässt sich in einem Nagelsetzgerät verwenden, insbesondere in Druckluftnaglern.

Schließlich schlägt die vorliegende Erfindung gemäß Anspruch 15 vor, einen erfindungsgemäßen Nagel oder einen erfindungsgemäßen Nagelstreifen zur Befestigung von Fassadenbrettern an einer Unterkonstruktion, insbesondere an einer Holzkonstruktion, zu verwenden.

Weitere Merkmale und Vorteile der Erfindung werden anhand der nachfolgenden Beschreibung von zwei Ausführungsformen erfindungsgemäßer Nägel unter Bezugnahme auf die beiliegende Zeichnung beschrieben. In der Zeichnung zeigt
- Figur 1: eine Vorderansicht eines Nagels gemäß einer Ausführungsform der vorliegenden Erfindung;
- Figur 2: die Einzelheit II aus Figur 1 in vergrößerter Ansicht;
- Figur 3: den Nagel aus Figur 1 in Draufsicht;
- Figur 4: eine perspektivische Ansicht eines Nagels gemäß einer weiteren Ausführungsform der vorliegenden Erfindung;
- Figur 5: eine Vorderansicht des in Figur 4 gezeigten Nagels;
- Figur 6: den Ausschnitt VI in Figur 5 in vergrößerter Darstellung;
- Figur 7: den Ausschnitt VII aus Figur 5 in vergrößerter Darstellung und
- Figur 8: den Nagel aus Figur 5 in Draufsicht.

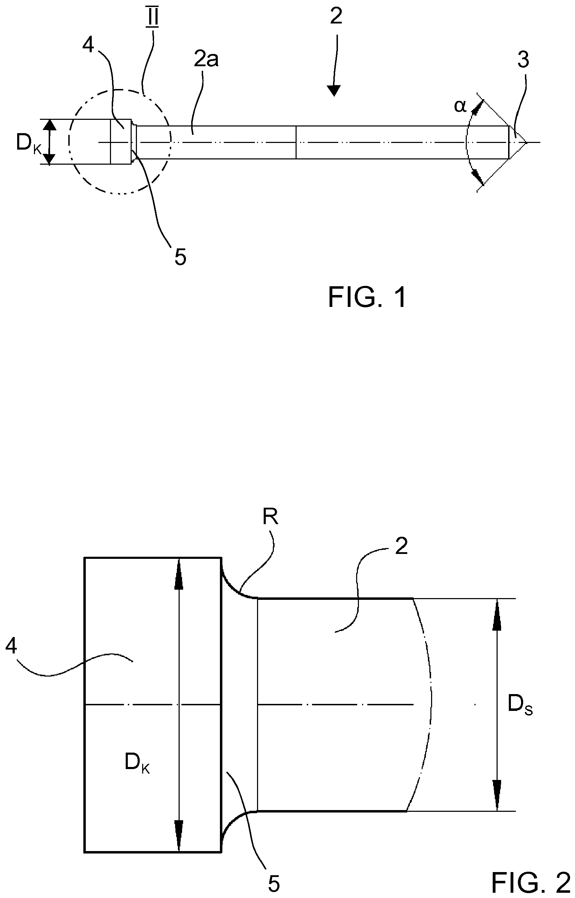

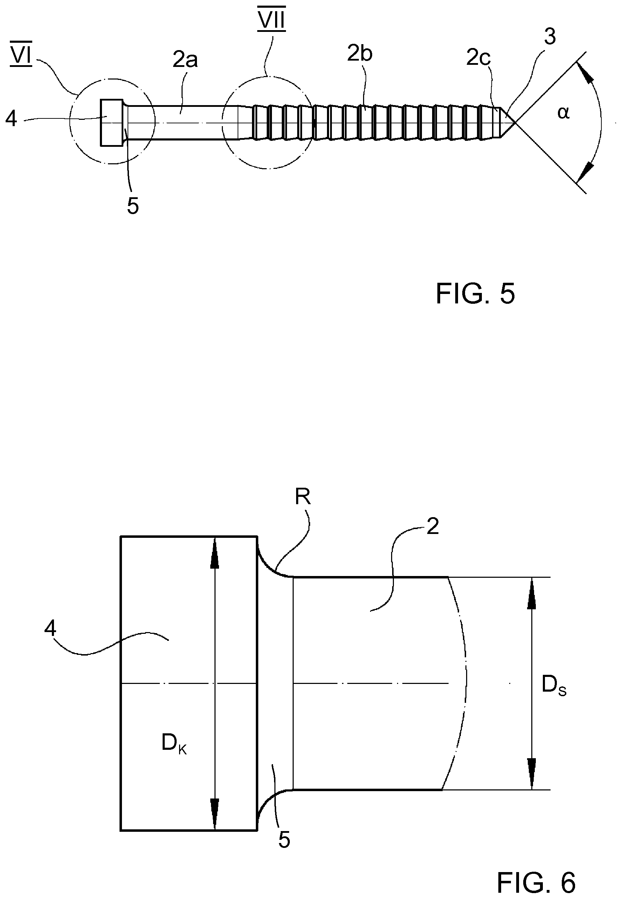

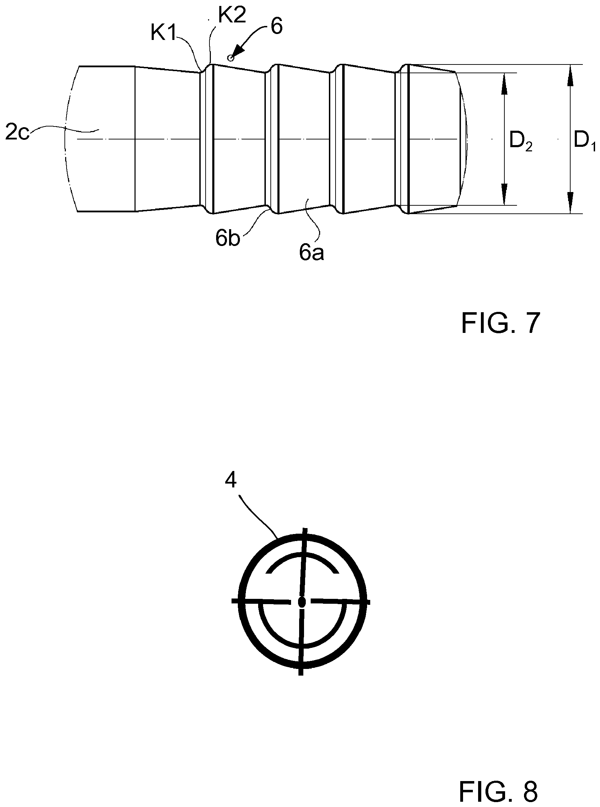

Die Figuren 1 bis 3 und 4 bis 8 zeigen zwei Ausführungsformen eines Nagels 1 der vorliegenden Erfindung. Der Nagel 1 besteht aus einem überwiegend lignocellulosischem Material mit einer Dichte von mehr als 1,1 g/cm³. Bei dem lignocellulosischem Material handelt es sich vorliegend um einen organisch gebundenen Holzwerkstoff in Form eines kunstharzgebundenen, Schichtholzes, das eine Vielzahl von Schichten aufweist. Alternativ kann es sich bei dem lignocellulosischem Material aber auch Kunstharz gebundenen Faserverbundwerkstoff, der lignocellulosische Fasern enthält, handeln. Der organisch gebundene Holzwerkstoff enthält bei dieser Ausführungsform Kunstharz in einer Menge von mehr als 15 Gew%. Der Kunstharzanteil beträgt vorliegend etwa 20 Gew%.

Der Nagel 1 umfasst einen Nagelschaft 2, der eine Nagelachse X definiert, eine am vorderen Ende des Nagelschaftes 2 angeordnete Nagelspitze 3 und einen am hinteren Ende des Nagelschaftes 2 angeordneten, gegenüber diesem verbreitert ausgebildeten Nagelkopf 4, wobei sich zwischen dem Nagelschaft 2 und dem Nagelkopf 4 ein sich zum Nagelschaft 2 aufweitender Übergangsbereich 5 erstreckt. Der Nagelschaft 2, die Nagelspitze 3, der Nagelkopf 4 und der Übergangsbereich 5 weisen jeweils einen kreisrunden Querschnitt auf.

Die Nagelspitze 3 ist kegelförmig ausgebildet und besitzt einen Spitzenwinkel α , der im Bereich von 60° und 120° liegt und in dem dargestellten Ausführungsbeispiel 90° ± 3° beträgt. Alternativ könnte auch eine ballistische ausgebildete Nagelspitze 3 vorgesehen sein, deren Spitzenwinkel gemessen zwischen dem vorderen Ende der Nagelspitze 3 und dem hinteren Ende der Nagelspitze 3 am Übergang zum Nagelschaft 2 gemessen wird. Die Nagelspitze 3 ist hierbei bevorzugt spitz zulaufend ausgebildet, kann aber auch abgerundet sein.

Der Nagelkopf 4 ist zylindrisch ausgebildet und besitzt in der Nagellängsrichtung eine Länge von 1,5 bis 4,5 mm, hier von 3 mm. Der Außendurchmesser des Nagelkopfes 3 liegt im Bereich von 5,0 bis 7,0 mm und beträgt in dem dargestellten Ausführungsbeispiel 6,3 mm. Wesentlich ist, dass der Durchmesser des Nagelkopfes 4 um 25 bis 40%, insbesondere 34 ± 1% größer ist als der Durchmesser des zum Übergangsbereich 5 benachbarten axial hinteren Endabschnitts des Nagelschafts 2. Dieser liegt im Bereich zwischen 3,5 mm und 5,5, mm und beträgt in dem dargestellten Ausführungsbeispiel 4,7 mm.

Der Übergangsbereich 5 zwischen dem Nagelschaft 2 und dem Nagelkopf 4 erweitert sich vom Nagelschaft 2 zum Nagelkopf 4 hin. Dabei ist die ringförmige Außenfläche des Übergangsbereichs 5 zur Nagelachse X hin, d.h. konkav gekrümmt ausgebildet, und besitzt die Außenfläche im Querschnitt, d.h. jeweils im Längsschnitt durch den Nagel 1, eine kreisbogenabschnittförmige Kontur, die sich über einen Umfangswinkel von 90° erstreckt. Die Außenfläche beginnt unmittelbar an der vorderen äußeren Umfangskante des Nagelkopfes 4 und geht stetig in den Nagelschaft 2 über. Dabei besitzt die kreisbogenabschnittförmige Kontur einen Rundungsradius R, welcher ≥ 0,3 mm, bevorzugt ≥ 0,6 mm ist und in dem dargestellten Ausführungsbeispiel 0,8 mm beträgt.

Der Nagel 1 besitzt eine Gesamtlänge im Bereich von 50 mm und 90 mm, wobei die Gesamtlänge im dargestellten Ausführungsbeispiel 58 mm beträgt.

Bei dem in den Figuren 1 bis 3 dargestellten Nagel 1 besitzt der Nagelschaft 2 über seine gesamte Länge einen konstanten Durchmesser.

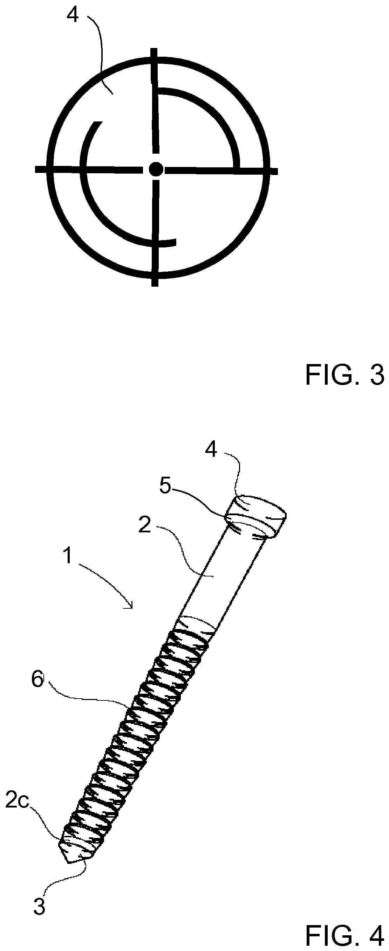

Die in den Figuren 4 bis 8 dargestellte Ausführungsform des erfindungsgemäßen Nagels 1 unterscheidet sich von der in den Figuren 1 bis 3 dargestellten Ausführungsform lediglich darin, dass der Nagelschaft 2 nicht glatt mit einem über seine Gesamtlänge konstanten Querschnitt ausgebildet ist. Vielmehr ist lediglich der sich an den Übergangsbereich 5 anschließende hintere Endabschnitt 2a des Nagelschaftes 2 glatt mit einem konstanten Durchmesser von hier 4,7 mm ausgebildet. Dieser axial hintere Endabschnitt 2a erstreckt sich über eine Strecke von 15 mm.

Der sich an diesen axial hinteren Endabschnitt 2 in Richtung der Nagelspitze 3 anschließende axiale Schaftabschnitt 2b weist keine glatte Außenfläche auf. Vielmehr sind an diesem axialen Schaftabschnitt 2b Verankerungsstrukturen 6 ausgebildet, die jeweils einen sich zur Nagelspitze 3 konisch verjüngenden Strukturabschnitt 6a aufweisen und einen sich rückseitig daran anschließenden Übergangsabschnitt 6b. Insgesamt sind an dem axialen Schaftabschnitt 15 solcher Verankerungsstrukturen 6 vorgesehen, die jeweils in gleicher Weise ausgebildet sind.

Im Einzelnen weisen die Verankerungsstrukturen 6 einen maximalen Strukturdurchmesser D₁ auf, der größer als der Schaftdurchmesser D_{S} des hinteren Endabschnitts 2a des Nagelschaftes 2 ist, der sich an den Übergangsbereich 5 anschließt. Dabei sollte der maximale Strukturdurchmesser D₁ wenigstens 1,5 % und/oder um maximal 3 % größer sein als der Schaftdurchmesser des hinteren Endabschnitts 2a des Nagelschaftes 2. In dem dargestellten Ausführungsbeispiel beträgt der maximale Strukturdurchmesser D₁ 4,8 mm und liegt jeweils am zum Nagelkopf 4 weisenden hinteren Ende der sich konisch verjüngenden Strukturabschnitte 6a. Mit anderen Worten ist der maximale Strukturdurchmesser D₁ um 2,1% größer als der Schaftdurchmesser D_{S} des axial hinteren Endabschnitts 2a des Nagelschaftes 2.

Die Verankerungsstrukturen 6 besitzen an den vorderen Enden der sich konsich verjüngenden Strukturabschnitte 6a einen minimalen Strukturdurchmesser D₂, der kleiner als der Schaftdurchmesser D_{S} an des hinteren Endabschnitts 2a des Nagelschaftes 2 ist, der sich an den Übergangsbereich 5 anschließt. Dabei sollte der minimale Strukturdurchmesser D₂ um wenigstens 8% und/oder maximal 12% kleiner als der Schaftdurchmesser D_{S} des axial hinteren Endabschnitts des Nagelschafts 2 sein. In dem dargestellten Ausführungsbeispiel beträgt der minimale Schaftdurchmesser D₂ 4.3 mm, so dass er um 8,5 % kleiner als der Schaftdurchmesser D_{S} ist.

Die an den zum Nagelkopf 4 weisenden Rückseiten der sich konisch verjüngenden Strukturabschnitte 6a liegenden Übergangsabschnitte 6b sind zweistufig ausgebildet, wobei die Übergangsstufen jeweils einen kreissegmentartigen Querschnitt aufweisen. Dabei ist der Krümmungsradius K1 der zweiten Übergangsstufe größer als der Krümmungsradius K1 der ersten Übergangsstufe ist. In dem dargestellten Ausführungsbeispiel beträgt der Krümmungsradius K1 der ersten Übergangsstufe 0,2 mm und der Krümmungsradius K2 der zweiten Übergangsstufe 0,25 mm.

Zwischen dem axialen Schaftabschnitt 2b, an welchem die Verankerungsstrukturen 6 ausgebildet sind, und der Nagelspitze 3 liegt ein weiterer vorderer Endabschnitt 2c mit einem konstanten Außendurchmesser, welcher dem Schaftdurchmesser des sich an den Übergangsbereich 5 anschließenden axial hinteren Endabschnitts 2a des Nagelschafts 2 entspricht und eine axiale Länge von 0,5 bis 1,5 mm, hier 1 mm besitzt.

Die erfindungsgemäßen Nägel 1 können aus einem Vollmaterial, insbesondere einem Stangenmaterial durch Drehen oder Drechseln hergestellt werden.

### Bezugszeichenliste

- 1: Nagel
- 2: Nagelschaft
- 2a: hinterer Endabschnitt des Nagelschafts
- 2b: Schaftabschnitt mit Verankerungsstruktur
- 2c: vorderer Endabschnitt des Nagelschafts
- 3: Nagelspitze
- 4: Nagelkopf
- 5: Übergangsbereich
- 6: Versenkungsstrukturen
- 6a: sich konisch verjüngender Strukturabschnitte
- 6b: Übergangsabschnitte
- α: Spitzenwinkel
- D₁: Strukturdurchmesser
- D₂: Strukturdurchmesser
- R: Rundungsradius
- Dₛ: Durchmesser
- D_{K}: Durchmesser

## Patentansprüche

1. Nagel, insbesondere für den Einsatz in einem Nagelsetzgerät, der aus einem ausschließlich oder überwiegend lignozellulosischem Material besteht und einen Nagelschaft (2), der eine Nagelachse (X) definiert, eine am vorderen Ende des Nagelschafts (2) angeordnete Nagelspitze (3) und einen am hinteren Ende des Nagelschafts (2) angeordneten, gegenüber dem Nagelschaft (2) verbreitert ausgebildeten Nagelkopf (4) aufweist, **dadurch gekennzeichnet, dass** der Nagelschaft (2), die Nagelspitze (3) und der Nagelkopf (4) einen kreisrunden Querschnitt besitzen, und dass der Nagelschaft (2) und der Nagelkopf (4) durch einen sich zum Nagelkopf (4) aufweitenden Übergangsbereich (5) verbunden sind, dessen ringförmige Außenfläche zur Nagelachse (X) hin konkav gekrümmt ist.

2. Nagel nach Anspruch 1, **dadurch gekennzeichnet, dass** die Außenfläche des Übergangsbereichs (5) im Querschnitt kreisbogenabschnittförmig ausgebildet ist und sich insbesondere über einen Umfangswinkel von 90° erstreckt, wobei die Außenfläche insbesondere einen Rundungsradius (R) aufweist, der ≥ 0,3 mm, bevorzugt ≥ 0,6 mm ist und besonders bevorzugt 0,8 mm beträgt..

3. Nagel nach einem der vorherigen Ansprüche, **dadurch gekennzeichnet, dass** der Übergangsbereich (5) unmittelbar an der vorderen Stirnfläche, insbesondere der vorderen äußeren Umfangskante des Nagelkopfes (4) beginnt und/oder stetig in den Nagelschaft (2) übergeht.

4. Nagel nach einem der vorherigen Ansprüche, **dadurch gekennzeichnet, dass** der Nagelkopf (4) einen Durchmesser (D_{K}) von wenigstens 5 mm und/oder von maximal 7,0 mm aufweist und der Durchmesser (D_{K}) bevorzugt 6,3 mm ± 0,3 mm beträgt und/oder dass der Durchmesser (D_{K}) des Nagelkopfes (4) um 25% bis 40%, insbesondere um 34 ± 1% größer ist als der Durchmesser eines sich an den Übergangsbereich (5) anschließenden axial hinteren Endabschnitts (2a) des Nagelschafts (2) und/oder die Gesamtlänge des Nagelkopfes ≥ 1,5 mm und/oder ≤ 4,5 mm ist und insbesondere 3 mm bis 3,2 mm beträgt.

5. Nagel nach einem der vorherigen Ansprüche, **dadurch gekennzeichnet, dass** der Nagel eine Gesamtlänge von wenigstens 50 mm und/oder von maximal 90 mm, insbesondere von maximal 80 mm und besonders bevorzugt von maximal 70 mm aufweist und die Gesamtlänge bevorzugt 58 mm beträgt und/oder dass der Spitzenwinkel (α ) der Nagelspitze (3) im Bereich von 60 bis 120° liegt und insbesondere 90° ± 3° beträgt.

6. Nagel nach einem der vorherigen Ansprüche, **dadurch gekennzeichnet, dass** ein sich an den Übergangsbereich (5) anschließender axial hinterer Endabschnitt (2a) des Nagelschaftes (2) einen konstanten Durchmesser (Dₛ) aufweist, der insbesondere wenigstens 3,5 mm und/oder maximal 5,5 mm und bevorzugt 4,7 mm beträgt.

7. Nagel nach einem der vorherigen Ansprüche, **dadurch gekennzeichnet, dass** der Nagelschaft (2) über seine gesamte Länge einen konstanten kreisrunden Querschnitt aufweist.

8. Nagel nach Anspruch 6, **dadurch gekennzeichnet, dass** der Nagelschaft (5) einen sich an den axial hinteren Endabschnitt (2a) anschließenden axialen Schaftabschnitt (2b) aufweist, an welchem Verankerungsstrukturen (6) ausgebildet sind, die jeweils einen sich zur Nagelspitze (3) konisch verjüngenden Strukturabschnitt (6a) aufweisen, wobei die Verankerungsstrukturen (6) bevorzugt in gleicher Weise ausgebildet sind.

9. Nagel nach Anspruch 8, **dadurch gekennzeichnet, dass** die Verankerungsstrukturen einen maximalen Strukturdurchmesser (D₁) aufweisen, der größer, insbesondere um wenigstens 1,5 % und/oder um maximal 3% grö-ßer, bevorzugt um 2 bis 2,2 % größer als der Schaftdurchmesser (Dₛ) des axial hinteren Endabschnitts (2a) des Nagelschaftes (2) ist, der sich an den Übergangsbereich (5) anschließt, wobei der maximale Strukturdurchmesser (D₁) insbesondere 4,8 mm beträgt.

10. Nagel nach einem der Ansprüche 8 oder 9, **dadurch gekennzeichnet, dass** die Verankerungsstrukturen (6) einen minimalen Strukturdurchmesser (D₂) aufweisen, der kleiner, insbesondere um wenigstens 8% und/oder maximal 12% kleiner, bevorzugt um 8,3 bis 8,7 % kleiner als der Schaftdurchmesser (Dₛ) des axial hinteren Endabschnitts (2a) des Nagelschaftes (2) ist, der sich an den Übergangsbereich (5) anschließt, wobei der minimale Schaftdurchmesser (D₂) bevorzugt 4,3 mm beträgt.

11. Nagel nach einem der Ansprüche 9 und 10, **dadurch gekennzeichnet, dass** der maximale Strukturdurchmesser (D₁) jeweils am zum Nagelkopf (2) weisenden hinteren Ende der sich konisch verjüngenden Strukturabschnitte (6a) und der minimale Strukturdurchmesser (D₂) an deren vorderen Enden vorhanden sind.

12. Nagel nach Anspruch 11, **dadurch gekennzeichnet, dass** die Verankerungsstrukturen (6) jeweils einen in der Längsrichtung hinter den sich konisch verjüngenden Strukturabschnitten liegenden zweistufigen Übergangsabschnitt (6b) aufweisen, dessen erste, hintere Übergangsstufe einen kreissegmentartigen Querschnitt und dessen zweite, vordere Übergangsstufe einen kreissegmentartigen Querschnitt aufweist, wobei der Krümmungsradius (K₂) der zweiten Übergangsstufe größer als der Krümmungsradius (K₁) der erste Übergangsstufe ist, wobei der Krümmungsradius (K₁) der ersten Übergangsstufe insbesondere 0,2 mm und der Krümmungsradius (K₂) der zweiten Übergangsstufe insbesondere 0,25 mm beträgt und/oder dass die Gesamtlänge der Verankerungsstrukturen (6) mit dem sich konisch verjüngenden Strukturabschnitt (6a) und dem Übergangsabschnitt (6b) wenigstens 2 mm und/oder maximal 2,3 mm beträgt und insbesondere die Verankerungsstrukturen (6) eine Gesamtlänge von 2,1 mm ausweisen, und/oder
dass zwischen dem axialen Schaftabschnitt (2b), an welchem die Verankerungsstrukturen (6) ausgebildet sind, und der Nagelspitze (3) ein vorderer Endabschnitt (2c) des Nagelschafts (2) mit einem konstanten Durchmesser, welcher dem Durchmesser des hinteren axialen Endabschnitts (2a) entspricht, vorgesehen ist, wobei insbesondere die axiale Länge des vorderen axialen Endabschnitts (2a) zwischen 0,5 und 1,5 mm liegt und vorzugsweise 1 mm beträgt.

13. Nagel nach einem der vorherigen Ansprüche, **dadurch gekennzeichnet, dass** dieser aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignozellulosische Faser enthält, hergestellt ist, wobei der organisch gebundene Werkstoff insbesondere Melamin oder Phenolharz als Kunstharz enthält und/oder der organisch gebundene Holzwerkstoff Kunstharz insbesondere in einer Menge von wenigstens 10 Gew%, insbesondere von wenigstens 15 Gew% enthält, wobei der Kunstharzanteil bevorzugt 20 Gew% beträgt,
und/oder dass diese aus einem Material mit einer Dichte größer 0,65 g/cm³, insbesondere einer Dichte größer 0,85 g/cm³, bevorzugt einer Dichte größer 1,0 g/cm³ oder einer Dichte größer 1,1 g/cm³ besteht.

14. Nagelstreifen umfassend eine Mehrzahl von Nägeln nach einem der vorherigen Ansprüche.

15. Verwendung eines Nagels nach einem der Ansprüche 1 bis 13 oder eines Nagelstreifens nach Anspruch 14 zur Befestigung von Fassadenbrettern an einer Unterkonstruktion.

## Claims

1. Nail, in particular for use in a nail setting device, which consists of an exclusively or predominantly lignocellulosic material and has a nail shaft (2) defining a nail axis (X), a nail tip (3) arranged at the front end of the nail shaft (2) and a nail head (4) arranged at the rear end of the nail shaft (2) and designed to be broader than the nail shaft (2), **characterized in that** the nail shaft (2), the nail tip (3) and the nail head (4) have a circular cross-section, and **in that** the nail shaft (2) and the nail head (4) are connected by a transition region (5) which widens towards the nail head (4) and whose annular outer surface is curved concavely towards the nail axis (X).

2. Nail according to claim 1, **characterized in that** the outer surface of the transition region (5) is formed in the shape of a section of a circular arc in cross-section and extends in particular over a circumferential angle of 90°, the outer surface having in particular a radius of curvature (R) which is ≥ 0.3 mm, preferably ≥ 0.6 mm, and particularly preferably 0.8 mm.

3. Nail according to one of the previous claims, **characterized in that** the transition region (5) begins directly at the front end face, in particular the front outer circumferential edge of the nail head (4) and/or merges continuously into the nail shaft (2).

4. Nail according to one of the previous claims, **characterized in that** the nail head (4) has a diameter (D_{K}) of at least 5 mm and/or of at most 7.0 mm and the diameter (D_{K}) is preferably 6.3 mm ± 0.3 mm and/or that the diameter (D_{K}) of the nail head (4) is by 25% to 40%, in particular by 34 ± 1% larger than the diameter of an axially rear end section (2a) of the nail shaft (2) adjoining the transition region (5) and/or the total length of the nail head is ≥1.5 mm and/or ≤4.5 mm and in particular is 3 mm to 3.2 mm.

5. Nail according to one of the previous claims, **characterized in that** the nail has an overall length of at least 50 mm and/or of at most 90 mm, in particular of at most 80 mm and especially preferably of at most 70 mm, and the overall length is preferably 58 mm, and/or **in that** the point angle (α) of the nail point (3) is in the range from 60 to 120° and in particular is 90° ± 3°.

6. Nail according to one of the previous claims, **characterized in that** an axially rear end section (2a) of the nail shaft (2) adjoining the transition region (5) has a constant diameter (Ds) which is in particular at least 3.5 mm and/or at most 5.5 mm and preferably 4.7 mm.

7. Nail according to one of the previous claims, **characterized in that** the nail shaft (2) has a constant circular cross-section over its entire length.

8. Nail according to claim 6, **characterized in that** the nail shank (5) has an axial shank section (2b) adjoining the axially rear end section (2a), on which anchoring structures (6) are formed which each have a structure section (6a) tapering conically towards the nail tip (3), the anchoring structures (6) preferably being formed in the same way.

9. Nail according to claim 8, **characterized in that** the anchoring structures have a maximum structure diameter (D₁) which is larger, in particular by at least 1.5% and/or by a maximum of 3% larger, preferably by 2 to 2.2% larger, than the shank diameter (D_{S}) of the axially rear end portion (2a) of the nail shaft (2) which adjoins the transition region (5), the maximum structure diameter (D₁) being in particular 4.8 mm.

10. Nail according to one of the claims 8 or 9, **characterized in that** the anchoring structures (6) have a minimum structure diameter (D₂) which is smaller, in particular smaller by at least 8% and/or at most 12%, preferably smaller by 8.3 to 8.7%, than the shank diameter (D_{S}) of the axially rear end portion (2a) of the nail shaft (2) which adjoins the transition region (5), the minimum shank diameter (D₂) preferably being 4.3 mm.

11. Nail according to one of claims 9 and 10, **characterized in that** the maximum structure diameter (D1) is present at the rear end of the conically tapering structure sections (6a) facing the nail head (2) and the minimum structure diameter (D₂) is present at the front ends thereof.

12. Nail according to claim 11, **characterized in that** the anchoring structures (6) each have a two-stage transition section (6b) lying in the longitudinal direction behind the conically tapering structure sections, the first, rear transition stage of which has a circular-segment-like cross-section and the second, front transition stage of which has a circular-segment-like cross-section, the radius of curvature (K₂) of the second transition stage being greater than the radius of curvature (K₁) of the first transition stage, the radius of curvature (K₁) of the first transition stage being in particular 0.2 mm and the radius of curvature (K₂) of the second transition stage being in particular 0.25 mm, and/or **in that** the total length of the anchoring structures (6) with the conically tapering structure section (6a) and the transition section (6b) is at least 2 mm and/or at most 2.3 mm and in particular the anchoring structures (6) have an overall length of 2.1 mm, and/or
that between the axial shank portion (2b), on which the anchoring structures (6) are formed, and the nail tip (3) a front end portion (2c) of the nail shaft (2) with a constant diameter corresponding to the diameter of the rear axial end portion (2a) is provided, wherein in particular the axial length of the front axial end portion (2a) is between 0.5 and 1.5 mm and is preferably 1 mm.

13. Nail according to one of the previous claims, **characterized in that** it is made of wood and/or a wood material, in particular an organically bonded wood material, preferably a synthetic resin-bonded laminated wood or a synthetic resin-bonded fiber composite material containing lignocellulosic fiber, wherein the organically bonded material contains in particular melamine or phenolic resin as synthetic resin and/or the organically bonded wood material contains synthetic resin in particular in an amount of at least 10% by weight, in particular of at least 15% by weight, the synthetic resin content preferably being 20% by weight,
and/or **in that** it consists of a material having a density greater than 0.65 g/cm³, in particular a density greater than 0.85 g/cm³, preferably a density greater than 1.0 g/cm³ or a density greater than 1.1 g/cm³.

14. Nail strip comprising a plurality of nails according to any one of the preceding claims.

15. Use of a nail according to any one of claims 1 to 13 or a nail strip according to claim 14 for fastening facade boards to a substructure.

## Revendications

1. Clou, en particulier pour l'utilisation dans un appareil à poser les clous, qui est constitué d'un matériau exclusivement ou principalement lignocellu-losique et qui présente une tige de clou (2) qui définit un axe de clou (X), une pointe de clou (3) disposée à l'extrémité avant de la tige de clou (2) et une tête de clou (4) disposée à l'extrémité arrière de la tige de clou (2) et réalisée plus large que la tige de clou (2), **caractérisé en ce que** la tige de clou (2), la pointe de clou (3) et la tête de clou (4) possèdent une section transversale circulaire, et **en ce que** la tige de clou (2) et la tête de clou (4) sont reliées par une zone de transition (5) s'élargissant vers la tête de clou (4), dont la surface extérieure annulaire est courbée de manière concave vers l'axe de clou (X).

2. Clou selon la revendication 1, **caractérisé en ce que** la surface extérieure de la zone de transition (5) est réalisée en section transversale en forme de segment d'arc de cercle et s'étend en particulier sur un angle périphérique de 90°, la surface extérieure présentant en particulier un rayon d'arrondi (R) qui est ≥ 0,3 mm, de préférence ≥ 0,6 mm et qui est de manière particulièrement préférée de 0,8 mm.

3. Clou selon l'une des revendications précédentes, **caractérisé en ce que** la zone de transition (5) commence directement sur la surface frontale avant, en particulier sur le bord périphérique extérieur avant de la tête du clou (4) et/ou se prolonge de manière continue dans la tige du clou (2).

4. Clou selon l'une des revendications précédentes, **caractérisé en ce que** la tête de clou (4) présente un diamètre (Dₖ) d'au moins 5 mm et/ou d'au maximum 7,0 mm et le diamètre (Dₖ) est de préférence de 6,3 mm ± 0,3 mm et/ou **en ce que** le diamètre (Dₖ) de la tête de clou (4) est de 25% à 40%, en particulier de 34 ± 1% plus grand que le diamètre d'une section d'extrémité (2a) axialement arrière de la tige de clou (2) se raccordant à la zone de transition (5) et/ou la longueur totale de la tête de clou est ≥ 1,5 mm et/ou ≤ 4,5 mm et est en particulier de 3 mm à 3,2 mm.

5. Clou selon l'une des revendications précédentes, **caractérisé en ce que** le clou présente une longueur totale d'au moins 50 mm et/ou d'au maximum 90 mm, en particulier d'au maximum 80 mm et de manière particulièrement préférée d'au maximum 70 mm et que la longueur totale est de préférence de 58 mm et/ou que l'angle de pointe (α ) de la pointe du clou (3) se situe dans la plage de 60 à 120° et est en particulier de 90° ± 3°.

6. Clou selon l'une des revendications précédentes, **caractérisé en ce qu'**une section d'extrémité (2a) axialement arrière de la tige de clou (2) se raccordant à la zone de transition (5) présente un diamètre constant (Ds), qui est notamment d'au moins 3,5 mm et/ou au maximum de 5,5 mm et de préférence de 4,7 mm.

7. Clou selon l'une quelconque des revendications précédentes, **caractérisé en ce que** la tige de clou (2) présente une section circulaire constante sur toute sa longueur.

8. Clou selon la revendication 6, **caractérisé en ce que** la tige de clou (5) présente une section de tige axiale (2b) se raccordant à la section d'extrémité axiale arrière (2a), sur laquelle sont formées des structures d'ancrage (6) qui présentent chacune une section de structure (6a) se rétrécissant de manière conique vers la pointe du clou (3), les structures d'ancrage (6) étant de préférence formées de la même manière.

9. Clou selon la revendications 8, caractérisé en se que les structures d'ancrage (6) présentent un diamètre maximal de structure (D1) qui est supérieur, notamment d'au moins 1,5% et/ou au maximum de 3%, de préférence de 2 à 2,2%, au diamètre de tige (Ds) de la partie d'extrémité axialement arrière (2a) de la tige de clou (2) qui se raccorde à la zone de transition (5), le diamètre maximal de structure (D1) étant notamment de 4,8 mm.

10. Clou selon l'une des revendications 8 ou 9, **caractérisé en ce que** les structures d'ancrage (6) présentent un diamètre de structure minimal (D2) inférieur, notamment inférieur d'au moins 8% et/ou d'au plus 12%, de préférence inférieur de 8,3 à 8,7%, au diamètre de tige (Ds) de la portion d'extrémité axialement arrière (2a) de la tige de clou (2) qui se raccorde à la zone de transition (5), le diamètre de tige minimal (D2) étant de préférence égal à 4,3 mm.

11. Clou selon l'une des revendications 9 et 10, **caractérisé en ce que** le diamètre de structure maximal (D1) est présent à l'extrémité arrière, orientée vers la tête du clou (2), des sections de structure (6a) se rétrécissant de manière conique et le diamètre de structure minimal (D2) est présent à leurs extrémités avant.

12. Clou selon la revendication 11, **caractérisé en ce que** les structures d'ancrage (6) présentent chacune une section de transition (6b) à deux étages située dans la direction longitudinale derrière les sections de structure se rétrécissant de manière conique, dont le premier étage de transition arrière présente une section transversale en forme de segment de cercle et dont le deuxième étage de transition avant présente une section transversale en forme de segment de cercle, le rayon de courbure (K₂) du deuxième étage de transition étant plus grand que le rayon de courbure (K₁) du premier étage de transition, le rayon de courbure (K₁) du premier étage de transition étant en particulier de 0,2 mm et le rayon de courbure (K₂) du deuxième étage de transition étant en particulier de 0,25 mm et/ou **en ce que** la longueur totale des structures d'ancrage (6) avec la section de structure (6a) se rétrécissant en cône et la section de transition (6b) est d'au moins 2 mm et/ou au maximum de 2,3 mm et en particulier les structures d'ancrage (6) présentent une longueur totale de 2,1 mm, et/ou
**en ce qu'**il est prévu, entre la partie axiale de la tige (2b), sur laquelle sont formées les structures d'ancrage (6), et la pointe du clou (3), une partie d'extrémité avant (2c) de la tige du clou (2) ayant un diamètre constant qui correspond au diamètre de la partie d'extrémité axiale arrière (2a), la longueur axiale de la partie d'extrémité axiale avant (2a) étant notamment comprise entre 0,5 et 1,5 mm et étant de préférence de 1 mm.

13. Clou selon l'une des revendications précédentes, **caractérisé en ce qu'**il est réalisé en bois et/ou en un matériau à base de bois, en particulier un matériau à base de bois à liant organique, de préférence un bois stratifié à liant de résine synthétique ou un matériau composite à base de fibres à liant de résine synthétique, qui contient des fibres lignocellulosiques, le matériau à liant organique contenant en particulier de la mélamine ou de la résine phénolique comme résine synthétique et/ou le matériau en bois à liant organique contenant de la résine synthétique en particulier en une quantité d'au moins 10 % en poids, en particulier d'au moins 15 % en poids, la proportion de résine synthétique étant de préférence de 20 % en poids,
et/ou **en ce que** celle-ci est constituée d'un matériau ayant une densité supérieure à 0,65 g/cm³, en particulier une densité supérieure à 0,85 g/cm³, de préférence une densité supérieure à 1,0 g/cm³ ou une densité supérieure à 1,1 g/cm³.

14. Bande de clous comprenant une pluralité de clous selon l'une quelconque des revendications précédentes.

15. Utilisation d'un clou selon l'une quelconque des revendications 1 à 13 ou d'une bande de clous selon la revendication 14 pour la fixation de planches de façade sur une ossature.
